# EUROPEAN PATENT APPLICATION

(11) **EP 1 950 766 A2**
(43) Date of publication of application: **30.07.2008**
(21) Application number: 08007046.9
(22) Date of filing: 17.05.2006
(51) Int. Cl.: H01B 1/16

(54) **A conductive composition ansd a rear substrate of a plasma display**

(30) Priority: 29.06.2005 JP 2005190106; 12.12.2005 US 299523
(62) Divisional of application: 06010135.9
(71) Applicant: E.I. DU PONT DE NEMOURS AND COMPANY, Wilmington DE 19898 (US)
(72) Inventor: Cho, Yong-Woo, Utsunumiya-shi Tochigi 321-0954 (JP); Tsuchiya, Motohiko, Utsunomiya-shi Tochigi 320-0003 (JP); Lee, Ji-Yeon, Utsunomiya-shi Tochigi 321-0954 (JP)
(74) Representative: Hughes, Andrea Michelle

(57) **Abstract**

The present invention relates to a conductive composition for a plasma display panel (hereinafter called PDP). More particularly, the conductive composition of the present invention relates to a conductive composition which has high durability for an etching liquid and is suitable for forming ribs from rib material by chemical etching.

## Description

### FIELD OF THE INVENTION

The present invention relates to a conductive composition for a plasma display panel (hereinafter called PDP). More particularly, the conductive composition of the present invention relates to a conductive composition which has superior chemical etching durability and is suitable for forming ribs from rib material by chemical etching. The invention also relates to the electrodes which use this conductive composition,

### TECHNICAL BACKGROUND

The rear substrate for a PDP is comprised of at least address electrodes and ribs which are placed on the rear glass substrate and has a laminated structure wherein phosphors (RGB) are placed between each rib. In certain instances, a dielectric layer or insulating layer is formed intermediate between the address electrodes and the ribs.

The methods for forming the ribs on the rear substrate for PDP includes a print laminating, sandblasting and chemical etching.

The print laminating method is a method of forming ribs with a predetermined thickness on a rear glass substrate where address electrodes are formed by repeatedly printing rib material.

In the sandblasting method, a layer comprised of rib material is formed on a rear glass substrate where address electrodes are formed and a mask layer is formed on the layer comprised of the rib material. Then, by using the mask layer and sandblasting treatment, the rib material is removed from the part where the mask layer is not present. After that, the mask layer is removed.

In the chemical etching method, a layer comprised of rib material is formed on a rear glass substrate where address electrodes are formed and a mask layer is formed on the layer comprised of rib material. Then, by using the mask layer and chemical etching, the rib material is removed from the part where the mask layer is not present. After that, the mask layer is removed.

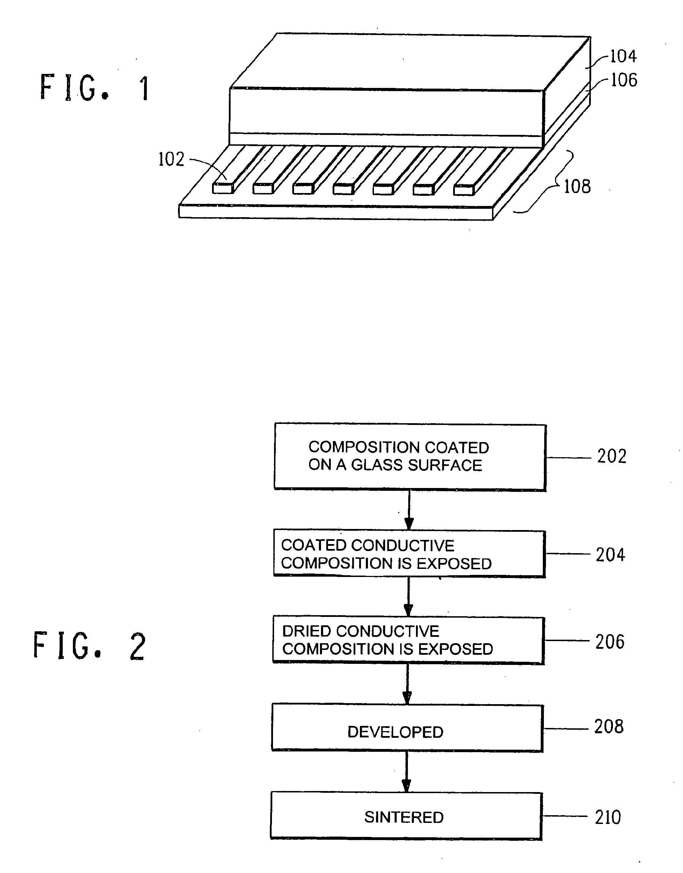

Among the above-described rib-forming methods, when the ribs are formed by using the chemical etching method, the address electrodes may be harmed by chemical etching. More practically, as shown in Figure 1, when the ribs are formed, most of address electrodes (102) are found in the side closer to the substrate rather than in the side closer to layer (104) which is usually comprised of the rib material, or they are found in the side closer to the substrate rather than the side closer to dielectric layer or insulating layer (106) which is found in the lower part of the rib material (that is, the address electrodes are found in the tower side of these layers). However, the layer, which is usually comprised of the rib material and the dielectric layer or insulating layer, is not formed in the upper side of terminal part (108) which is found at the edge of the substrate to provide electric pressure to the address electrodes. Therefore, when the chemical etching is done, terminal part (108) of the address electrodes can be harmed by the etching liquid which may cause malfunction of the plasma display such as breaking of wire. Furthermore, when the dielectric layer or insulating layer is not formed, the address electrodes can be exposed to the etching liquid during the chemical etching process. This may be harmful to them and cause a malfunction of the plasma display such as breaking of wire.

Japanese published unexamined application No. Hei 11-339554 is an example of the conductive composition for the address electrodes of the plasma display panel. It discloses a conductive paste comprising a conductive powder with an average particle diameter of 0.5-2 µm and a tap density of 3-7 g/cm³, wherein said conductive powder and an organic element are the essential components. In this reference, the particle diameter and tap density of the conductive powder are specified. Also, it discloses a glass frit comprised of silicon oxide, boron oxide, zinc oxide and aluminum oxide. However, this reference does not provide disclosure on the chemical etching durability.

Japanese published unexamined application No. 2005-70079 discloses a photosensitive conductive composition having an excellent formability of high-resolution patterns and excellent firing property at a temperature of 620°C or lower. It also discloses a plasma display panel using this conductive composition. This photosensitive conductive composition comprises: (A) silver powder having a low degree of crystallization (the particle size is 0.1-5µm, or preferably 0.4-2.0µm); (B) organic binder; (C) photo-polymerized monomer; (D) photo-polymerization initiator; and (E) lead-free glass powder. Also, the silver powder with a low degree of crystallization, which is listed as (A), is a half-value width of Ag (111) surface peak and shows a value of 0.15°C or more. However, this reference does not have any disclosure on the chemical etching durability.

Japanese published unexamined application No. 2004-127529 discloses a photosensitive conductive paste for address electrodes wherein thin line patterns with a line width of 20 µm or less can be formed without generating line defect by undercut. This photosensitive conductive paste comprises: (A) organic binder; (B) silver powder with a first particle diameter of 0.1-0.8µm; (C) photo-polymerized monomer; (D) photo-polymerization initiator; and (E) organic solvent. The content of the silver powder in the paste is 40-60% by weight. The content of the organic solvent in the organic material found in the paste is 40% by weight or more. However, this reference does not have any disclosure on the chemical etching durability.

Japanese published unexamined application No. 2004-55402 discloses a conductive paste composition for PDP having a superior conductivity and capable of forming electrode patterns having an excellent adhesive property. This conductive paste composition comprises: (A) conductive powder with a specific surface area of 1.5-5.0 m²/g (the particle diameter is preferably 0.5-5 µm); (B) glass frit; and (C) bonding resin. However, this reference only discloses an example wherein lead-free glass frit is used as the glass frit and does not have any disclosure on the chemical etching durability by the combination of a predetermined silver particle and a lead-containing glass frit.

Japanese published unexamined application No. Hei 11-339554 discloses conductive powder and conductive paste wherein refined patterns can be formed for circuit patterns, plasma display, electrodes of the substrate for the plasma display and the thickness of the electrodes can be reduced and the resistance can be lowered. This conductive paste comprises a conductive powder with an average particle diameter of 0.5-2 µm and a tap density of 3-7 g/cm³ and an organic element as its essential components. However, this reference does not have any disclosure on the chemical etching durability.

Japanese published unexamined application no. Hei 11-339554 discloses a substrate for a plasma display wherein refined patterns can be formed and electrode patterns with a reduced thickness and low resistance are formed. This substrate comprises electrodes made of a conductive paste containing conductive powder with an average particle diameter of 0.5-2 µm and a tap density of 3-5 g/cm³. However, this reference does not have any disclosure on the chemical etching durability.

Japanese published unexamined application No. Hei 10-319580 discloses a photosensitive conductive paste which is capable of forming refined patterns and suitable for obtaining circuit patterns with low resistance. It also discloses a method for manufacturing electrodes. This photosensitive conductive paste comprises sphere-shaped conductive powder with an average particle diameter of 0.7-6 µm and a photosensitive organic element. However, this reference does not have any disclosure on the chemical etching durability.

As described above, a variety of conductive compositions are disclosed. However, there is a demand for conductive compositions capable of forming address electrodes having chemical etching durability.

### BRIEF DESCRIPTION OF THE DRAWINGS

Figure 1 is a schematic diagram illustrating the problematic points in manufacturing the rib parts of the conventional PDP.
Figure 2 is a flowchart of the manufacturing process of the address electrodes using the conductive composition of the present invention.
Figure 3 is a schematic diagram illustrating the manufacturing process of the address electrodes using the conductive composition of the present invention.
Figure 4 is a flowchart of the manufacturing process for forming the rear substrate of the PDP.
Figure 5 is a schematic diagram illustrating the manufacturing process for forming the rear substrate of the PDP.
Figure 6 is a schematic diagram illustrating the evaluation procedure for evaluating the conductive composition of the present invention.
Figure 7 is a schematic diagram illustrating the evaluation procedure for evaluating the conductive composition of the present invention.
Figure 8 is a schematic diagram illustrating the evaluation procedure for evaluating the conductive composition of the present invention.
Figure 9 is a schematic diagram illustrating the evaluation procedure for evaluating the conductive composition of the present invention.
Figure 10 is a schematic diagram illustrating the evaluation procedure for evaluating the conductive composition of the present invention.
Figure 11 is a schematic diagram illustrating the plasma display of the present invention.

### SUMMARY OF THE INVENTION

The present invention relates to a conductive composition having high chemical etching durability comprised of silver powder with an average particle diameter of 1.0 µm -2.5µm and lead-containing glass frit.

The conductive composition of the present invention is used for address electrodes when ribs of a plasma display are formed by chemical etching. According to the conductive composition of the present invention, the ratio of the content of the lead-containing glass frit to that of the silver powder is preferably 0.75:99.25 to 6.0:94.0. Also, the softening point of the lead-containing glass frit is preferably 430°C -510°C. This lead-containing glass frit preferably contains PbO, B₂O₃ and SiO₂.

The present invention also concerns electrodes formed by using the above-described conductive composition.

The conductive composition of the present invention has high chemical etching durability. Therefore, it is possible to control damage to the terminals of address electrodes which is caused by the etching liquid during the chemical etching process where a rib is formed. As a result, defects originating from the damage of the terminals of the address electrodes in a plasma display can be controlled.

### DETAILED DESCRIPTION OF THE INVENTION

The present invention relates to a composition useful for electrodes comprising silver powder with a predetermined average particle diameter (average particle diameter of 1.0µm -2.5 µm) and lead-containing glass frit. The composition of the present invention is a conductive composition particularly useful for address electrodes and is capable of preventing the address electrodes from being damaged during the chemical etching process where PDP is formed by chemical etching.

The conductive composition of the present invention comprises silver powder with an average particle diameter of 1.0-2.5 µm and lead-containing glass frit. The ratio of the content of the lead-containing glass frit and the silver powder is preferably 0.75:99.25 to 6.0:94.0 by weight, more preferably 1.5:98.5 to 6.0:94.0 by weight, or even more preferably 1.5:98.5 to 3.0:97.0, by weight. By setting the ratio in the above-described ranges, it is possible to achieve high chemical etching durability during the formation of the ribs.

Higher chemical etching durability is achieved where the softening point of the lead-containing glass frit is preferably 430°C - 510°C and more preferably 470°C -510°C.

The term softening point (Ts) of the glass frit means the second heat peak which is generated by differential thermal analysis (DTA). Softening point (Ts) of the glass frit can be measured by a device for differential thermal analysis (DTA). Practically, the softening point can be measured by using about 50 mg of glass frit powder which is heated at a temperature rising rate of 20°C/minute.

Although applicant does not intend to be not bound by a theoretical concept, it appears that, by decreasing the size of the average particle diameter of silver, the film may become dense which improves the chemical etching durability. Here, however, the range of particle size is taught herein is important because, when the average particle diameter of silver is too small, the silver powder may be aggregated. Furthermore, when the composition of the present invention is a photosensitive conductive composition, it is known that its photosensitivity is deteriorated as a result of excessively decreasing the size of the average particle diameter of silver.

It is known that electrodes which are burned substances (residue where only Ag and Pb system glass frit are left) have low chemical etching durability if the electrodes have a high ratio of Ag to the glass frit. It is believed that the melted glass frit part is susceptible to corrosion during the chemical etching process and the electrodes are damaged where the damage originates from the glass frit part. Therefore, in the present invention, it is preferable to limit the ratio of the ratio of the conductive powder to that of the glass frit to a predetermined range to avoid these undesirable characteristics.

The conductive composition of the present invention may be photosensitive. When the composition of the present invention is a photosensitive composition, a radiosensitive element, which constitutes the below described alkaline development-type radiosensitive resist composition, may be added. When a photosensitive composition is added to the conductive composition, it is also possible to form electrode patterns without using the resist composition.

To formulate the conductive composition, a vehicle of each element is formulated by using organic elements and solvent as may be necessary, which is then mixed with the silver powder and the glass frit. After that, the obtained mixture is kneaded by using a sand mixer, such as a roll mixer, mixer, homogeneous mixer, ball mill and bead mill, thereby obtaining the conductive composition.

### (I) SILVER POWDER

Silver powder is added to the composition of the present invention to provide conductivity. Its average particle diameter is 1.0-2.5µm, or preferably 1.0-2.0 µm, or more preferably 1.0-1.5µm. The average particle diameter is obtained by measuring the distribution of the particle diameters by using a laser diffraction scattering method and can be defined as d 50. Microtrac model X-100 is an example of the commercially-available devices.

The tap density of Ag is preferably 4.0 g/cm³ or more when it is considered that the chemical etching durability should be increased. The tap density can be measured by a method set by ASTM B-527. In this case, devices such as Dual Autotap (Quantacrome Corp.) or Tap Pack Volumeter (Sahndon Southern Instruments Inc.). According to an example of the practical measuring method, the tap density is evaluated as the powder form filling density by using a sample amount of 25 g and a 10-ml cylinder and after tapping the sample 8000 times.

The form of silver is not particularly limited. It can be in spherical or flake form. However, the spherical form is preferable in the photosensitive conductive composition.

### (II) GLASS FRIT

The glass frit is added to increase the sealing property of the composition with the glass substrate which is used for the rear substrate for the PDP. Also, the glass frit can sinter the silver particles at a low temperature. The average particle diameter is generally 0.1 µm -10 µm. Examples of lead-containing glass frit include lead borosilicate system compositions such as PbO, B₂O₃ and SiO₂. The lead borosilicate system glass frit can further contain another metal compound. Examples of the other metal compounds include: Al₂O₃, ZnO, Zr0₂, CaO, CuO, Bi₂O₃, BaO, MoO₃, MgO, La₂O₃, Nb₂O₅, Na₂O, Li₂O, GeO₂, P₂O₅, WO₃, Li₂SO₄, K₂O, TiO₂, Ag₂O, CeO₂, Cs₂O, CdO, Cr₂O₃, SnO₂, NiO, FeO, CoO, RuO₂, V₂O₅ and Y₂O₃. These metal compounds can be added to the composition based on the purpose used for. The content of the glass frit in the conductive composition is generally 0.01 %-25 % by weight to the conductive particles.

The total amount of the Ag particles and the glass frit in the composition of the present invention is 60%-90 % by weight based on the total weight of the dried conductive composition (that is, the conductive composition where the organic medium is removed).

### (III) ORGANIC POLYMER BINDER

The organic polymer binder is used for improving the coating property and stabilization of the coating film when the conductive composition is coated on a substrate in a screen printing or concerning technology field by using a commonly-known method. The organic polymer binder is removed when the electrodes are formed by sintering the conductive composition.

When the coated and dried conductive composition is developed with an aqueous developing fluid and its patterns are formed, it is preferable to use the organic polymer binder which has high resolution considering the developmental ability with the aqueous developing fluid. Examples of the organic polymer binder which can meet this condition include those that contain non-acidic comonomer or acidic comonomer. Copolymer or interpolymer (mixed polymer) which are formulated by the below described compositions are preferable.
(1) Non-acidic comonomer containing C₁-C₁₀ acrylic alkyl, C₁-C₁₀ methacrylic alkyl, styrene, substituted styrene or combination of these compositions; and
(2) acidic comonomer containing ethylene-type unsaturated carboxylic acid.

It is preferable for the technology of the present invention that the acidic comonomer element described in (2) is found in the comonomer or intermonomer. With the acidic functional group, it is possible to develop the coated film made of the composition of the present invention in an aqueous basic solution such as 0.8 % sodium carbonate solution.

The content of the acidic comonomer is at least 15% by weight to the total weight of the organic polymer binder, or preferably 15-30% by weight. When the acidic comonomer is present at a concentration of less than 15%, it is difficult to wash out the composition by the aqueous base. When the organic acidic comonomer is present at a concentration of more than 30%, the composition has low stability under the developing condition and only partial development is made in the image development. Examples of the appropriate acidic comonomers include: ethylene-type unsaturated monocarboxylic acid such as acrylic acid, methacrylic acid and crotonic acid; ethylene-type unsaturated dicarboxylic acid such as fumaric acid, itaconic acid, citraconic acid, vinyl succinic acid and maleic acid; hemi-ester of these compositions; and, in some cases, anhydride of these compositions or mixture thereof. The methacryl polymer group is more preferable than the acrylic polymer group since it burns clearly in low ambient oxygen.

When the non-acidic comonomer is acrylic alkyl or methacrylic alkyl as described above, it is preferable that such a non-acidic comonomer constitutes at least 50% by weight of the organic polymer binder, or preferably 70-75% by weight of the organic polymer binder.

When the non-acidic comonomer is styrene or substituted styrene, it is preferable that such a non-acidic comonomer constitutes 50% by weight of the organic polymer binder and the rest of 50% by weight is acidic comonomer such as hemi-ester of anhydride maleic acid. The preferable substituted styrene is α-methylstyrene.

When the non-acidic part of the organic polymer binder is acrylic alkyl, methacrylic alkyl, styrene or substituted styrene, it is possible to substitute this part with other monomers. Examples of the substituted monomers include acrylonitrile, vinyl acetate and acrylamide. The non-acidic element can contain about 50 % by weight or less of this substituted monomer. However, when the organic polymer binder contains this substituted monomer, it is more difficult to completely remove the organic polymer binder during the sintering process. Therefore, this type of monomer is preferably about less than 25% by weight of the total weight of the organic polymer binder.

The organic polymer binder can be made of a single copolymer or combination of copolymers as long as it satisfies the standards such as the development property and sintering property as described above. When copolymers are combined, in addition to the above-described copolymer, a small amount of other organic polymer binder can be added (for example, the ratio of the above-described copolymer to the additional organic polymer binder is 95:5). Examples of the additional organic polymer binder include polyolefin such as polyethylene, polypropylene, polybutylene, polyisobutylene and ethylene-propylenecopolymer and lower alkylenoxidepolymer.

The organic polymer binder which can be used in the conductive composition of the present invention can be manufactured by a solution polymerization method which is commonly used in the acrylic ester polymerization when the organic polymer binder is the above described preferred ones.

Typically, the above described acidic acrylic ester polymer can be manufactured by mixing a- or β-ethylene-type unsaturated acid (acidic comonomer) with one or more of vinyl monomer (non-acidic comonomer) which can be copolymerized in an organic solvent having a relatively low boiling point (75-150°C) and obtaining a 10-60% of monomer mixture solution: then, the obtained mixture is heated under a normal pressure at a temperature where the solvent refluxes. After the polymerization is substantially completed, the resultant acidic polymer solution is cooled down to a room temperature and the product is collected. Then, the viscosity, molecular weight and acid equivalent are measured.

Furthermore, the molecular weight of the above described organic polymer binder is kept at less than 50,000, or preferably at less than 25,000, or more preferably at less than 15,000.

The content of the organic polymer binder in the conductive composition is generally 5-50 % by weight of the total weight of the dried conductive composition (that is, the conductive composition where the organic medium is removed).

The conductive composition of the present invention can be formulated as the photosensitive composition. In this case, the composition contains, in addition to the above-described elements, at least a photo polymerization-type monomer and photo polymerization initiator. For example, after being formed as the coated film, the composition of the present invention can photo polymerize a photo polymerization-type monomer by light-irradiation (for example, ultraviolet irradiation). The polymer also functions as the binder resin for the address electrodes.

### Photo polymerization-type monomer

The photo polymerization-type monomer can be used independently or in combination with a plurality of monomers. Examples of the preferable monomer include: (metha)acrylic acid t-butyl, 1, 5-pentandioldi(metha)acrylate, (metha)acrylic acid N, N-dimethylaminoethyl, ethyleneglycoldi(metha)acrylate, 1, 4-butanedioldi(metha)acrylate, diethyleneglycoldi(metha)acrylate, hexamethyleneglycoldi(metha)acrylate, 1, 3-propanedioldi(metha)acrylate, decamethyleneglycoldi(metha)acrylate, 1,4-cyclohexanedioldi(metha)acrylate, 2, 2-dimethylolpropanedi(metha)acrylate, glyceroldi(metha)acrylate, tripropyleneglycoldi(metha)acrylate, glyceroltri(metha)acrylate, trimethylolpropanetri(metha)acrylate, the compound disclosed in U.S. Patent No. 3, 380,381 (Patent Reference 8), 2, 2-di(p-hydroxyphenyl)-propanedi(metha)acrylate, pentaetythritoltetra(metha)acrylate, triethyleneglycoldiacrylate, polyoxyetyl-1, 2-di-(p-hydroxyetyl)propanedimethacrylate, bisphenolAdi-[3-(metha)acryloxy-2-hydroxypropyl]ether, bisphenolAdi-[2-(metha)acryloxyetyl]ether, 1, 4-butanedioldi-(3-methacryloxy-2-hydroxypropyl)ether, triethyleneglycoldimethacrylate, polyoxypropyltrimetylolpropanetriacrylate, butyleneglycoldi(metha)acrylate, 1, 2, 4-butanedioltri(metha)acrylate, 2, 2, 4-trimethyl-1, 3-pentandioldi(metha)acrylate, 1-phenylethylene-1, 2-dimethacrylate, fumaric diallyl, styrene, 1, 4-benzenedioldimethacrylate, 1, 4-diisopropenylbenzene and 1, 3, 5-triisopropenylbenzene. Here, (metha)acrylate represents both acrylate and methacrylate.

The content of the photo polymerization-type monomer in the conductive composition is generally 1-25% by weight of the total weight of the dried conductive composition (that is, the conductive composition where the organic medium is removed).

### Photo Polymerization Initiator:

The photo polymerization initiator is used for photo polymerize the photo polymerization-type monomer. The photo polymerization initiator is thermally inactive at 185°C or lower, but it generates a free radical when it is exposed to actinic rays. Examples of the photo polymerization initiator include compounds having two intramolecular rings in the conjugated carbocyclic ring system. This type of compound contains substituted or non-substituted multinuclear quinone. Practically, examples of quinone include: 9, 10-anthraquinone, 2-methylanthraquinone, 2-ethylanthraquinone, 2-t-butylanthraquinone, octamethylanthraquinone, 1, 4-naphtoquinone, 9, 10-phenanthrenequinoen, benzo[a]anthracene-7, 12-dione, 2, 3-naphtacene-5, 12-dione, 2-methyl-1, 4-naphtoquinone, 1, 4-dimethylanthraquinone, 2, 3-dimethylanthraquinone, 2-phenylanthraquinone, 2, 3-diphenylanthraquinone, retenequinone, 7, 8, 9, 10-tetrahydronaphtacene-5, 12-dione and 1, 2, 3, 4-tetrahydrobenzo[a]anthracene-7, 12-dione. Another useful photo polymerization initiator is disclosed in U.S. Patent No. 2, 760,863 (Patent Reference 9). Some of the compounds disclosed in this patent reference are thermally active at a low temperature such as 85°C. Examples of this type of compound include: vicinal ketaldonyl alcohol such as benzoin and pivaloin; acyloinether such as benzoin's methylether and ethylether; α-methylbensoin, α-allylbenzoin, α-phenylbenzoin, thioxanthone and its derivative and carbon hydride-substituted aromatic acyloin containing hydrogen donor.

Also, as the initiator, it is possible to use a photo-reducing dye and reducing agent. Examples of this type of initiator include: those disclosed in U.S. Patent Nos. 2, 850,445; 2, 875,047; 3,097,96; 3,074,974; 3,097,097; and 3,145,104 (Patent References 10-15); and 2, 4, 5-triphenylimizolyl duplicitas with hydrogen donor containing leuco dye such as phenazine, oxazine and quinone group including Michler's ketone, ethyl Michler's ketone and benzophenone; and mixture thereof (disclosed in U.S. Patent Nos. 3, 427, 161; 3, 479,185; and 3, 549,367 (Patent References 16-18)).

Furthermore, the radiosensitizing agent disclosed in U.S. Patent No. 4,162,162 (Patent Reference 19) is useful along with the photo initiator and photo inhibitor. The content of the photo polymerization initiator in the conductive composition is generally 0.05-15 % by weight of the total weight of the dried conductive composition (that is, the conductive composition where the organic medium is removed).

### Organic Medium:

The conductive composition of the present invention can contain an organic medium. The main purpose of using the organic medium is to change the form of the dispersion liquid containing the solid part of the composition of the present invention which is finely crushed thereby easily coating glass, ceramics or other substrates. Therefore, firstly, the solid part of the organic medium should be the medium which can be dispersed while maintaining a proper stability. Secondly, the organic medium must have the rheologic property wherein a good coating property can be added to the dispersing liquid.

The organic medium may be one type of solvent or mixture of solvents. It is necessary to use a solvent in which polymer and other organic elements can be completely dissolved. It is also necessary to choose a solvent which is inactive (does not react) to other elements in the conductive composition. It is preferable to use a solvent having high volatility. The solvent can be easily evaporated from the composition even though it is coated at a relatively low temperature. The solvent suitable for the paste composition has a boiling point of lower than 300°C, or preferably lower than 250°C under normal pressure. Examples of the solvent include: aliphatic alcohol and aliphatic alcohol ester such as acetic ester and propionate ester; pine resin, α- or fl-terpineol or terpene made of mixture thereof; ethyleneglycol and ethyleneglycol ester such as ethyleneglycolmonobutylether and butylcellosolveacetate; butylcarbitol and carbitol ester such as butylcarbitolacetate and carbitolacetate; and Texanol (2, 2, 4-trimethyl-1, 3-pentandiolmonoisobutylate).

The content of the organic medium in the conductive composition is preferably 10-20% by weight of the total weight of the composition.

### Additional Elements

Additional elements known to those skilled in the art such as dispersing agent, stabilizer, plasticizer, parting agent, stripping agent, antifoaming agent and moistening agent can be present in the composition. Appropriate elements may be selected based on the conventional technologies.

The conductive composition of the present invention can be coated on a substrate by screen-printing, coating, laminating and other known methods in the technical field in question. These methods can be used for coating the composition of the present invention on an entire substrate. In this case, the composition of the present invention can be made to be the one which contains each of the above-described elements. Furthermore, when the composition treated with patterning is printed on a substrate in the screen-printing, the pattering process such as exposure can be omitted. Therefore, it is possible to make the composition without the above-described photosensitive element.

The composition of the present invention can be used for manufacturing address electrodes for a PDP. When the address electrodes are manufactured by chemical etching using the composition of the present invention, they are rarely damaged even though they are exposed to the etching liquid. Therefore, the composition of the present invention can control the cause of defects such as breaking of wire in the plasma display.

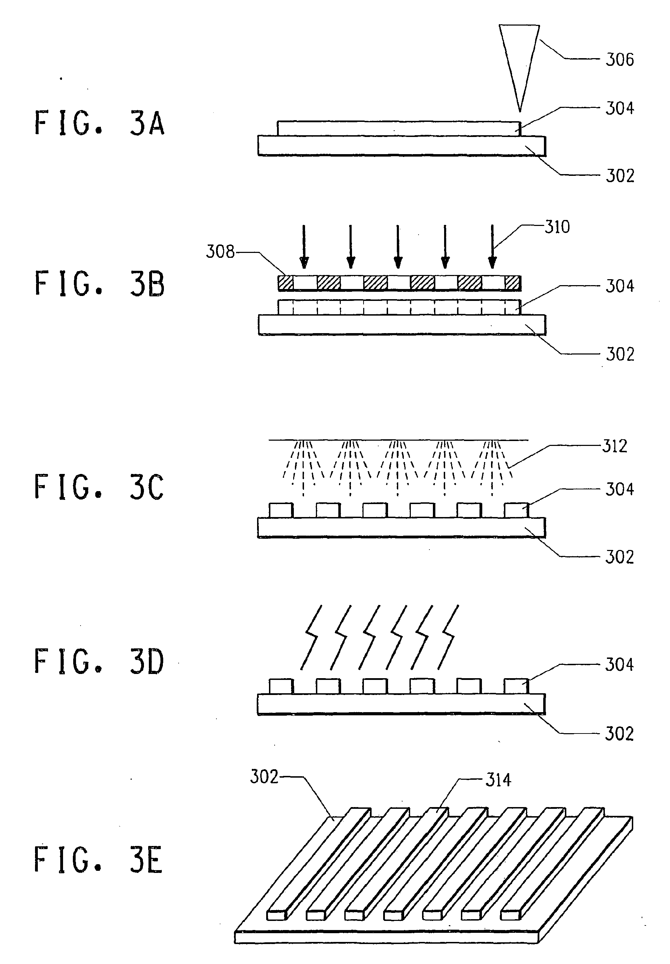

The present invention contains electrodes comprised of the above-described conductive composition. The electrodes of the present invention can be used as the address electrodes of a rear substrate for the PDP. The electrodes may be formed in a striped shape on a glass substrate as shown in Figure 3(E). The electrodes of the present invention has film thickness, form and pitch which are appropriate as the address electrodes for the PDP.

When the electrodes of the present invention are used as the address electrodes for the PDP and the rib is manufactured by chemical etching, the electrodes are rarely damaged even though they are exposed to the etching liquid. For example, the terminal parts of the address electrodes which are constantly exposed to the etching liquid are rarely damaged. Therefore, the electrodes of the present invention can control the cause of the defects such as breaking of wire in the plasma display.

A method for manufacture is now described; a rear substrate of a plasma display comprised of a step of forming address electrodes on said rear substrate, said address electrodes containing silver powder with a diameter of 1.0-2.5µm and lead-containing glass frit; a step of forming a layer comprised of rib material on said rear substrate; and a step of forming said rib by chemical etching said layer comprised of said rib material.

The method of the present invention will be explained by referring to the drawings.

The first step is a step of forming address electrodes by using the above-described conductive composition of the present invention. Figures 2 and 3 are explanatory views of the first process. Figure 2 is a flowchart and Figure 3 is a schematic diagram illustrating practical manufacturing procedures. The first step is described by referring to Figures 2 and 3 accordingly. Here, Figures 2 and 3 explain the case where the patterning is done by using the photosensitive conductive composition.

First, the composition of the present invention is coated on a glass substrate (Figure 2: 202). Conductive composition (304) is fully coated on glass substrate (302) by screen-printing and coating method (306) which uses a dispenser (Figure 3(A)). Next, the coated conductive composition is dried (Figure 2:204). The drying condition is not particularly limited if the layer of the conductive composition is dried. For example, it may be dried for 18-20 minutes at 100°C. Also, the composition can be dried by using a conveyer-type infrared drying machine.

Next, the dried conductive composition is treated with patterning. In the patterning treatment, the dried conductive composition is exposed (Figure 2:206) and developed (Figure 2:208). In the exposing process, photo mask (308) which has electrode patterns is placed on dried conductive composition (304) to which ultraviolet rays (310) are irradiated (Figure 3(B)). The exposing condition differs depending on the type of the conductive composition and the film thickness of the conductive composition. For example, in an exposing process where a gap of 200-400 µm is used, it is preferable to use ultraviolet ray of 100 mJ/cm² to 300 mJ/cm². The irradiating period is preferably 5-30 seconds. The development is made by alkaline solution. As the alkaline solution, 0.4 % sodium carbonate solution may be used. The development can be made by spraying alkaline solution (312) to exposed conductive composition layer (304) on substrate (302) or immersing substrate (302) which has exposed conductive composition (304) into the alkaline solution (Figure 3(C)).

Next, the conductive composition treated with patterning is sintered (Figure 2:210; Figure 3(D)). The composition can be sintered in a sintering furnace which has a predetermined temperature profile. The maximum temperature during the sintering process is preferably 400-600°C, or more preferably 500-600°C. The sintering period is preferably 1-3 hours, or more preferably 1.5 hours. After the sintering and cooling processes, substrate (303) with address electrodes (314) are obtained (Figure 3(E)). The film thickness and pitch of the address electrodes can be the same as conventional ones.

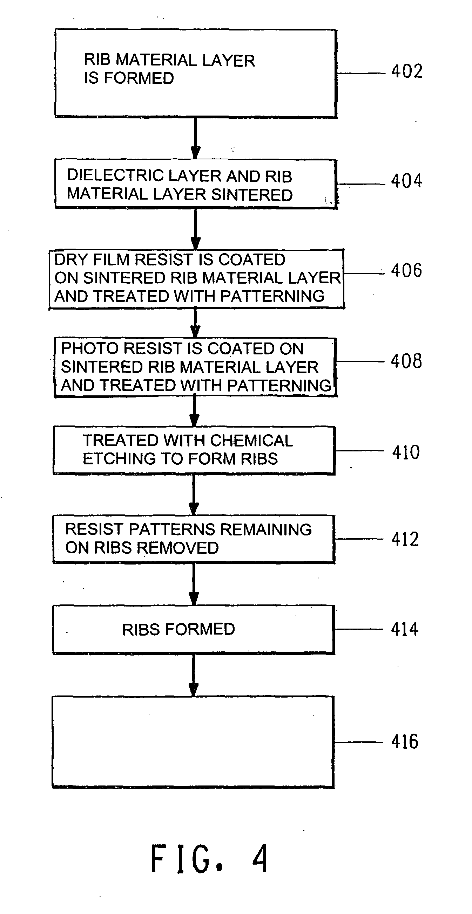

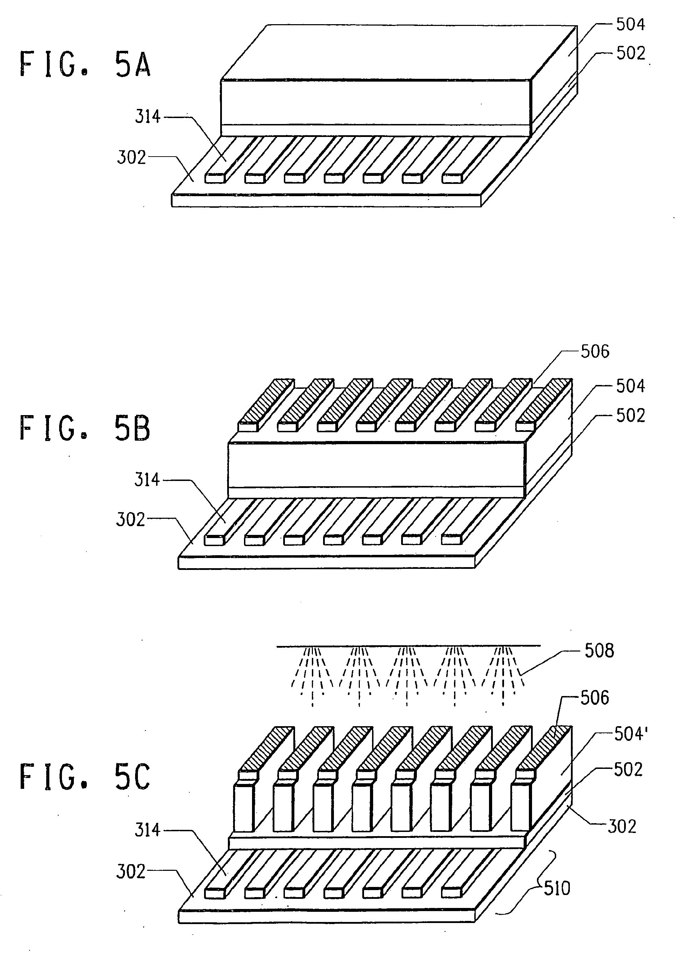

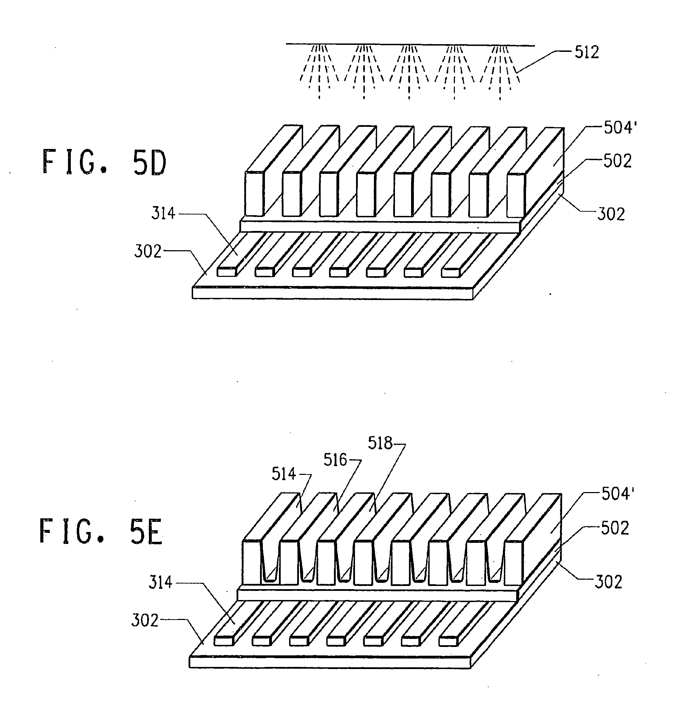

An example of forming address electrodes by patterning is described above. However, the first step is not limited to this procedure. For example, according to another procedure, electrode patterns are printed on substrate (302) beforehand by screen printing, which is then dried and sintered thereby forming address electrodes (314). The second and third steps are described below by referring to Figures 4 and 5 accordingly. The second step is the one wherein a layer made of rib material is formed on the rear substrate where the address electrodes are formed in the above-described way. The third step is the one wherein the above-described layer made of rib material is treated with chemical etching to form ribs.

First, rib material is coated on rear substrate (302) obtained in the previous step and rib material layer (504) is formed (Figure 4:402; Figure 5(A)). Dielectric layer or insulating
layer (502) may be formed on the entire rear substrate by covering the address electrodes before the rib material is coated. Dielectric layer or insulating layer (502) is fully coated, as may be necessary, on glass substrate (302) wherein the address electrodes are formed by screen-printing or dispenser. After the dielectric layer or insulating layer is formed, the rib material is fully coated on this layer by screen-printing or dispenser (Figure 5(A)).

The dielectric layer or insulating layer uses material which has durability for etching liquid during chemical etching process where ribs are formed. For example, it is possible to use material such as Pb-B-Si system glass with a low softening characteristic. Also, it is necessary to use a rib material which can be removed by the etching liquid when the ribs are formed. For example, it is possible to use Pb-B-Si system glass with a low softening characteristic where the etching speed is adjusted.

Next, the formed dielectric layer or insulating layer and the rib material layer are sintered (Figure 4:404). The sintering condition is the same as conventional technologies and not limited. For example, the temperature can be 400-580°C and the period is 1.5-3.0 hours.

Next, dry film resist (DFR) or photo resist (PR) is coated on the sintered rib material layer and treated with patterning (Figure 4:406 and 408; Figure 5(B)). The DFR or PR material is fully coated on rib material layer (504) by screen-printing or dispenser. After that, the coated rib material layer is dried, exposed, developed and treated with patterning to obtain resist patterns (506).

The resist material and rib material are usually used for forming ribs by chemical etching in the formation of a PDP panel. For example, commonly-used DFR for sandblasting can be used as the resist material. According to the condition for patterning the resist layer, the exposure is 100 *mJ*/*cm²* to 500 mJ/cm² for 5-50 seconds and the development is made by spraying 1 % sodium carbonate solution.

Next is a step wherein layer (504) made of the rib material which is the third step is treated with chemical etching to form ribs (504') (Figure 4:410; Figure 5(C)). During the chemical etching process, by spraying acidic solution (508), parts where the resist patterns are not formed are dissolved and removed thereby forming ribs (504').

As the acidic solution, 0.5-1.0 % hydrochloride aqueous solution can be used. When the chemical etching is done by spraying, the pressure of the spray can be 1.0 Kg/cm² to 3.0 Kg/cm².

Since the manufacturing method uses the conductive composition of the present invention, exposed part (510) of the address electrodes is rarely damaged even though it is treated with chemical etching.

Next, resist (DFR or PR) patterns which remain on the ribs are removed (Figure 4:412; Figure 5(D)). The resist patterns are removed by spraying alkaline aqueous solution (for example, sodium hydroxide aqueous solution) (512). When the resist is removed by spraying, the pressure of the spray can be 1.0 Kg/cm² to 3.0 Kg/cm².

The ribs can be arranged in a
desirable form by arranging the ribs in a line parallel to each other to create a striped form or arranging them in a double cross.

Next, fluorescent materials (514, 516 and 518) which emit red (R), green (G) and blue (B) colors are filled between the ribs. The fluorescent layer can be formed by selectively filling the fluorescent paste with each of the colors red (R), green (G) and blue (B) between ribs (504') which are then dried and sintered. For filling the fluorescent paste, it is possible to use a variety of methods which are conventionally used such as screen-printing method, photo lithography method, ink-jet method, dispensing method and electric field jet method. The present invention can use any of these methods.

According to the screen-printing method, the fluorescent paste is selectively filled between the ribs by screen-printing and dried. This process is repeated for multiple times and then the ribs are sintered.

Also, according to the photo lithography method, the photosensitive fluorescent paste is coated, exposed, developed and dried. This process is repeated for multiple times and then the ribs are sintered to form the fluorescent layer.

Furthermore, according to the ink-jet method, the fluorescent paste is filled between the ribs by spraying the fluorescent paste from the edge of an ink-jet nozzle.

According to the dispensing method, a nozzle for coating the paste which has discharge holes is used and a pressure is applied inside the coating nozzle and the fluorescent paste is filled between the ribs.

The electric field jet method is an improved version of the dispensing method. According to this method, the paste is coated while an electric pressure is applied between the electrodes which are placed near the paste discharge holes of the coating nozzle and the coated object.

The fluorescent paste can be the one which is conventionally used.

As described above, the ribs are formed (Figure 4:414; Figure 5(E)) and the rear substrate for a PDP can be obtained.

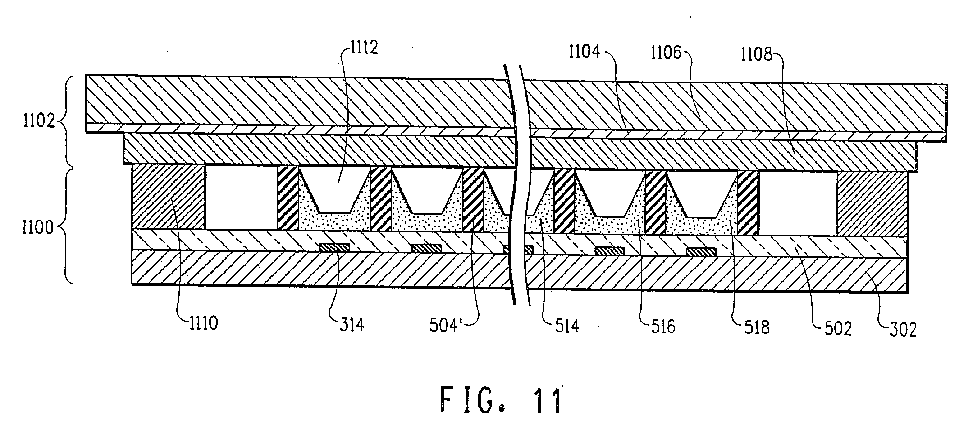

The present invention includes a plasma display panel which uses the above described rear substrate. As shown in Figure 11, the plasma display panel of the present invention has a structure wherein front substrate (1102) is attached to rear substrate (1100) which is obtained as described above.

Practically, as shown in the figure, the front substrate comprises glass substrate for the front substrate (1106), display electrode (1104) and dielectric material (with MgO) layer (1108). Rear substrate (1100) comprises glass substrate (302), address electrodes (314) which are placed on the glass substrate, dielectric layer (502) and ribs.(504') which are placed with a predetermined interval on the dielectric layer. Furthermore, sealing material (1110) for sealing the discharging space stands between the neighboring part of the front substrate and that of the rear substrate. The micro-space separated by front substrate (1102), rear substrate (1100) and ribs (504') is discharge space (1112). Fluorescent layers with colors of R, G and B (514, 516 and 518) are placed inside the discharge space wherein discharge gas made of a mixture of neon and quinone is filled.

In this type of PDP, an image is displayed by applying an electric pressure between the display electrode and the address electrodes and selectively emitting the fluorescent materials which are formed in the inner surface of the discharge space. According to the example shown in the figure, the ribs can be arranged in a line parallel to each other to create a striped discharge space or they can be arranged in a double-cross form by placing the discharge space in a matrix form.

Next, the method for manufacturing the plasma display panel (PDP) equipped with the above-described structure is briefly explained. According to this method, a front surface panel and rear surface panel are formed on one side of front substrate (1102) by using the front panel forming process wherein the panel components such as the display electrode and dielectric layer are sequentially formed and the above described method for manufacturing the rear substrate of the present invention. Then, front substrate (1102) is put on the top of rear substrate (1100) so that each panel component is joined together and the neighboring parts of the front substrate and the rear substrate are sealed by sealing material (1110). After that, air is discharged from discharge space (1112) which is formed between the two substrates which are attached and sealed and discharge gas is fed to the discharge space which is then aged.

Here, during the above described sealing process, sealing material made of frit glass with a low melting point is coated on the rim of either one of the front substrate and the rear substrate or both of the substrates by using a screen printing method and the like. Then, the coated substrate is pre-sintered to form a sealing layer. After that, the front substrate and the rear substrate are engaged and heat-treated (for example, 400°C) while they are being pressed. By doing so, the above-described sealing material is softened and smashed up and further heat-sealed thereby sealing the discharge space between the substrates.

### EXAMPLES

The present invention will be described in detail by referring to examples. However, the below described examples are not intended to limit the present invention. In the below described examples, percentages represent weight percentages unless otherwise specified.

### Example 1

An UV photosensitive thick film conductive composition was used in this example.

### Method for Measuring the Average Particle Diameter of Ag

The average particle diameter can be defined as the d50 which is obtained by measuring the distribution of the particle diameters by a laser diffraction scattering method. Microtrac model X-100 is an example of the commercially-available devices.

0.5 g of the powder was measured off into a beaker which was then filled by a dispersing medium wherein 0.2 % of dispersing agent (Darvan C) is dissolved into 100 cc of pure water. The resultant solution was stirred for 5 minutes by a 200W ultrasound stirring device. Then, the obtained solution was measured for 75 seconds by using Microtrac model X-100 to obtain the d50 value. The obtained d50 value was made to be the average particle diameter.

### A. Formulation of the Organic Medium

As the solvent, Texanol (2, 2, 4-trimethyl-1, 3-pentandiolmonoisobutylate) and acrylic polymer binder with a molecular amount of 30,000 were mixed and stirred. While they were being stirred, the temperature was increased to 100°C. The stirring with heat was continued until all the binder polymers were dissolved. The obtained solution was cooled down to 75°C. Then, Chiba Specialty Chemicals Co.'s Irgacure 907 and 651 were added as the photo polymerization initiator and TAOBN (1, 4, 4-trimethyl-2, 3-diazabicyclo[3. 2. 2]-non-2-en-N, N'-dioxide was added as the stabilizer. This mixture was stirred at 75 °C until all the solid parts were dissolved. This solution was put through a filter of 40 microns and cooled.

### B. Formulation of the Glass Frit

The glass frit was formulated by mixing each element in the below described composition.

Glass frit A (PbO: 68 % by weight; B₂O₃:14 % by weight; and SiO₂: 17 % by weight) with a softening point of 499°C.

Glass frit B (PbO: 77 % by weight; B₂O₃₁ 1 2.5 % by weight; SiO₂: 9.1 % by weight; and Al₂O₃: 1.4 % by weight) with a softening point of 438°C.

Glass frit C (BaO: 0.5 % by weight; B₂O₃: 7.5 % by weight; SiO₂: 0.5 % by weight; Al₂O₃: 0.5 % by weight; ZnO: 15 % by weight; and Bi₂O₃: 75 % by weight) with a softening point of 425°C.

Glass frit D (PbO: 11 % by weight; B₂O₃: 3.5 % by weight; SiO₂: 3.5 % by weight; and Bi₂O₃: 82 % by weight) with a softening point of 385°C.

### C. Formulation of the Paste

The paste was formulated by mixing 2.12 % by weight of TMPEOTA (trimethylolpropaneetoxytriacrylate), 0.83% by weight of TMPPOTA (trimethylolpropanepropoxytriacrylate) and 3.62% by weight of BSAF Corporation's Laromer LR8967 (polyesteracrylateoligomer) as the photo polymerization monomers; and 0.12% by weight of butylatedhydroxytoluene, 0.11% by weight of malonic acid and 0.12% by weight of Byk-Chemie Corporation's BYK085 as other organic elements into 24.19% by weight of the above described organic medium in a mixing bath under a yellow light. Next, a sphere-form Ag powder with an average particle diameter of 1.27 µm and the glass frit were added as the inorganic material to this organic element mixture. The ratio of the Ag powder to the grass frit was 1.5:98.5 by weight. The entire composition was mixed until the particles of the inorganic material were moistened by the organic material. This mixture was treated with roll milling by using a three-phase roll mill. The obtained paste was put through a filter screen of 500 meshes. The viscosity of the paste was adjusted by the above-described solvent, Texanol, thereby obtaining the optimum viscosity for print coating.

The elements used in Example 1 are shown in Table 1.

### Examples 2-6 and Comparative Examples 1-5

The conductive composition was formulated by the same procedure as Example 1 except that the elements were changed to those shown in Table 1.

**Table 1**

| Sample | Example 1 | Example 2 | Example 3 | Example 4 | Example 5 | Example 6 | Example 7 | Example 8 |
|---|---|---|---|---|---|---|---|---|
| Ag PSD (d50) | 1.27 µm | 1.27 µm | 1.27 µm | 1.27 µm | 1.27 µm | 1.27 µm | 1.5 µm | 1.27 µm |
| Frit | Pb-type | Pb-type | Pb-type | Pb-type | Pb-type | Pb-type | Pb-type | Pb-type |
| Temperature of Frit (°C) | 499 | 499 | 499 | 438 | 438 | 439 | 499 | 499 |
| Frit / Ag | 1.5/98.5 | 3.0/97.0 | 4.5/95.6 | 1.5/98.5 | 3.0/97.0 | 4.5/95.5 | 0.75/99.25 | 6.0/94.0 |

### Comparative Examples 1-5

The conductive composition was formulated by the same procedure as Example 1 except that the elements were changed to those shown in

**Table 2**

| Sample | Comparative Example 1 | Comparative Example 2 | Comparative Example 3 | Comparative Example 4 | Comparative Example 5 |
|---|---|---|---|---|---|
| Ag FSD (d50) | 1.27µm | 1.27µm | 1.27 µm | 3.1 µm | 2.85 µm |
| Frit | Bi-type | Bi-type | Bi-type | Bi-type | Bi-type |
| Temperature of Frit (°C) | 425 | 425 | 425 | 385 | 422 |
| Frit / Ag | 1.5/98.5 | 3.0/97.0 | 4.5/95.6 | 7.0/93.0 | 6.8/93.2 |

### Examples 9-12 and Comparative Examples 6-7

In these examples and comparative examples, the effects of the particle diameter of the silver powder in the conductive composition of the present invention were examined.

The conductive composition was formulated by the same procedure as Example 1 except that the elements were changed to those shown in Table 3. Also, the chemical etching durability and the resolution which were evaluated by the below described evaluating method were shown.

**Table 3**

| Sample | Comparative example 6 | Example 9 | Example 10 | Example 11 | Example 12 | Comparative example 7 |
|---|---|---|---|---|---|---|
| Ag PSD (d50) | 0.5 µm | 1.0µm | 1.5µm | 2.0 µm | 2.5 µm | 3.0 µm |
| Frit | Pb-type | Pb-type | Pb-type | Pb-type | Pb-type | Pb-type |
| Temperature of Frit (°C) | 499 | 499 | 499 | 499 | 499 | 499 |
| Frit / Ag | 1.5/98.5 | 1.5/98.5 | 1.5198.5 | 1.5/98.5 | 1.5/98.5 | 1.5/98.5 |
| Resolution (L/S) | Washed out | < 30 µm | <30µm | < 30µm | < 30µm | < 30 µm |
| Chemical etching durability | N/A | ⊚ | ⊚ | ○ | Δ | × |

As shown in Examples 9-12 and Comparative Examples 6-7, in the conductive composition of the present invention, the range of the average particle diameter (d50) of the Ag particle is preferably 1.0-2.5 µm. The particle diameter is preferably 1.0-2.0 µm, or more preferably 1.0-1.5 µm.

### Evaluation Method

### (i) Formation of the Patterns of the Address Electrodes

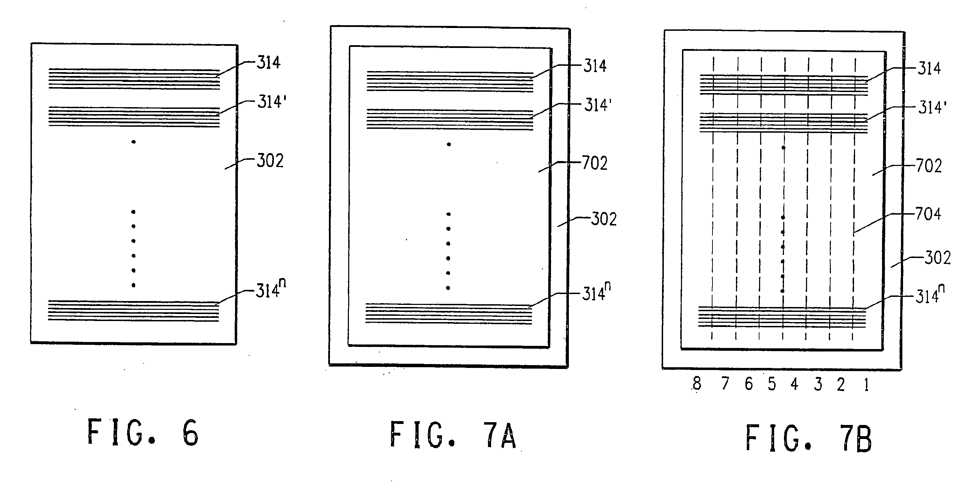

By using the conductive composition of Examples 1-12 and Comparative Examples 1-7 as described above, electrode patterns were formed. As the substrate, a PD200 natural glass (2 inches × 3 inches) was used. Address electrodes were formed on this substrate as shown in Figure 6 (the number of the electrodes with each line width was 10). The address electrodes on the substrate had line widths of 20, 30, 40, 50, 60, 70, 80, 90, 100, 110 and 120 µm. In the figure, the address electrodes with line widths of 20 and 30 µm were represented by 314 and 314' and the address electrode with a line width of 120 µm was represented by 314ⁿ and the address electrodes with other line widths were represented by dots (-) (the same rule is applied to Figures 6-10. Here, n = 8).

The condition for forming the electrode patterns is described below. First, the conductive composition of Examples 1-12 and Comparative Examples 1-7 were printed on the substrate by using screen mask SUS#400. The conductive composition was adjusted so that the dried film thickness became 8 µm ± 0.5µm and the post-sintered film thickness became 3 µm ± 0.1 µm. Next, the conductive composition was dried, exposed, developed and sintered under the below described condition.

### (a) Drying

### Conveyer-type infrared drying machine

100°C / maintained for 18-20 minutes. Total profile of 20 minutes.

### (b) Exposure

20µmL / S-120 µmL / using an S artwork (photo mask).

The composition was exposed at 100-300 mJ/cm² with an exposure distance of 200-400µm.

### (c) Development

0.4% NaCo₃ solution was sprayed to the composition with a pressure of 1.5 Kgf/cm² for 25 seconds and developed. The temperature of the solution was 30°C.

### (d) Sintering

570°C / maintained for 7.5 minutes. Total profile of 1.5 hours. Or 600°C / maintained 7.5 minutes. Total profile of 1.5 hours.

### (ii) Formation of the Range of the Chemical Etching Test

The range of the chemical etching test which is shown in Figure 7(B) was formed on the electrode patterns formed in the above-described manner. Practically, adhesive tape (702) which could cover all the electrode patterns as shown in Figure 7(A) was attached to the electrode patterns. Here, the adhesive tape was resistant to the acidic solution which was later used for treating the electrode patterns in the etching test. Next, adhesive tape (702) was cut into 8 areas so that the adhesive tapes on each area could be peeled off.

### (iii) Etching Test

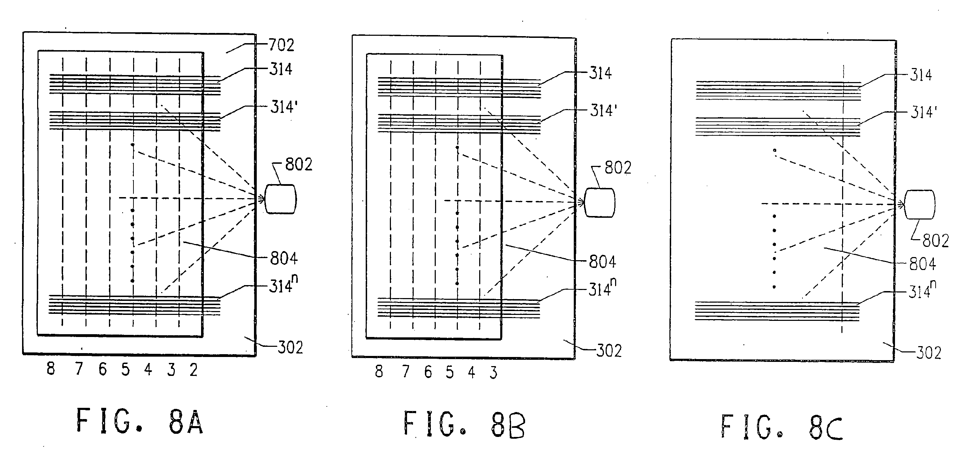

The etching test is described referring to Figure 8. First, the adhesive tape on the area (the 1st area (1 of Figure 7(B)), wherein the etching test of the test piece obtained in above described (ii) was to be conducted, was peeled off so that the address electrodes with each line width were exposed. Then, acidic solution (0.6-0.7 % HC1) was sprayed to the place where the address electrodes on the test piece were exposed (etching period: 10 seconds) (Figure 8(A)).

Next, the adhesive tape on the 2nd area (2 of Figure 7(B)) was peeled off so that the address electrodes with each line width on areas 1 and 2 were exposed. Then, acidic solution (0.6-0.7 % HC1) was sprayed to the place where the address electrodes on the test piece were exposed (etching period: 10 seconds) (Figure 8(B)).

This process was repeated to area 8 so that all the areas were exposed to the acidic solution (Figure 8(C). With this process, the address electrodes with each line width were exposed to the etching liquid on areas 1-8 for 10-80 seconds at 10-second intervals. In other words, area 1 was exposed to the etching liquid for the total period of 80 seconds, area 2 was exposed for the total period of 70 seconds, areas 3-7 were respectively exposed for the total period of 60-20 seconds at 10-second intervals and area 8 was exposed for the total period of 10 seconds.

Next, the substrate was washed with water.

### (iv) Evaluation

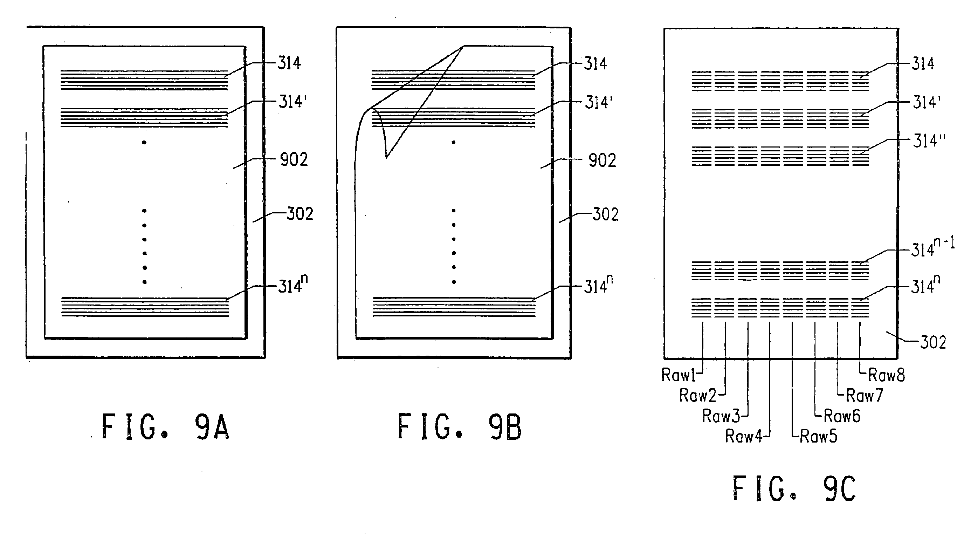

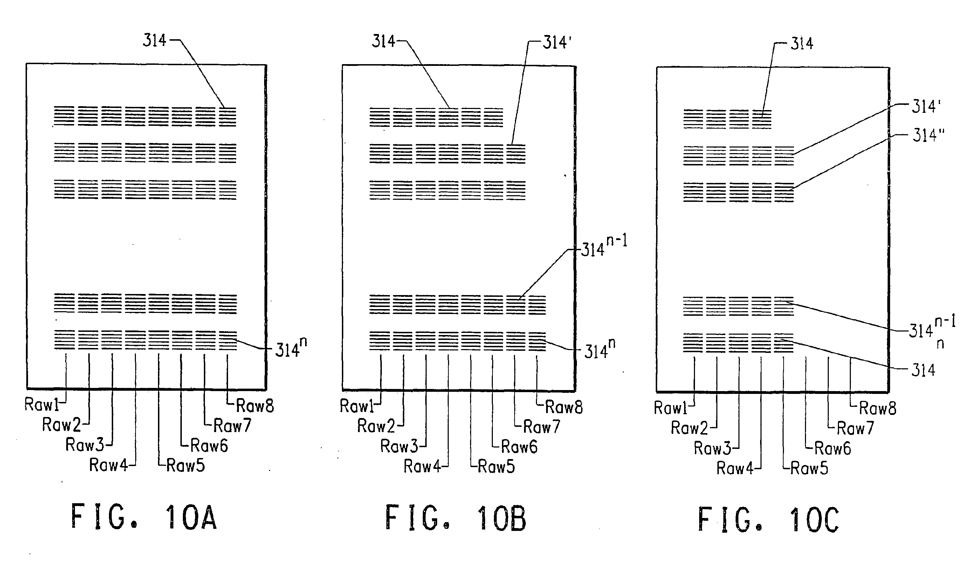

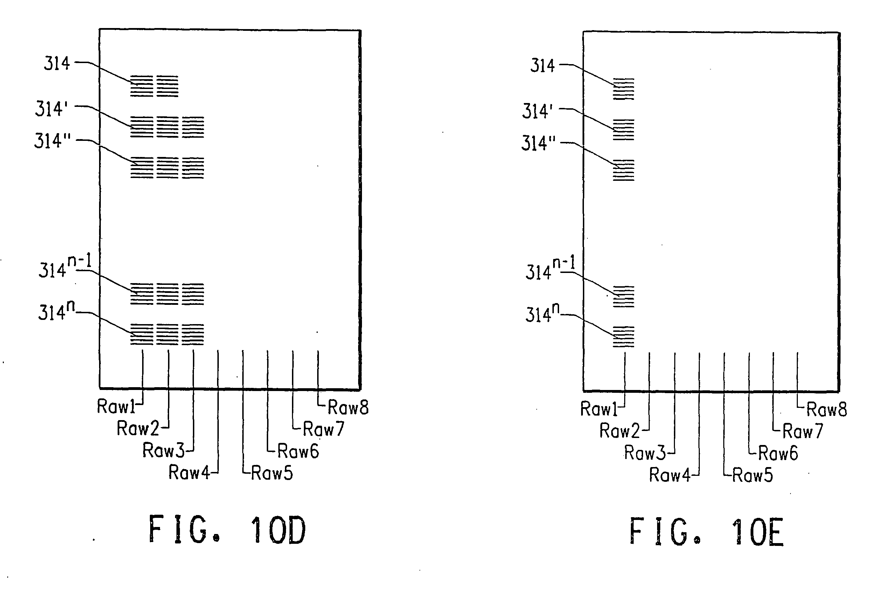

The procedure of the evaluation is explained referring to Figures 9 and 10. Based on the procedure described in (iii), adhesive tape (902) was attached so that it covers all the address electrodes on the test piece where the etching treatment was completed and the adhesive tape was peeled off (Figure 9(B)). By doing so, the parts of the electrode patterns which were damaged were peeled off together with the adhesive tape and detached from substrate 302 and removed.

As shown in Figure 9, the areas were numbered as raw 1-8 in order of the area where the etching period was the shortest and whether or not any lines of the address electrodes with each line width were missing on each area was examined. When one of the plurality of lines in each line width of the address electrodes was missing, it was considered defected. The rating standard is shown in Figure 4.

**Table 4**

| **Table 4 Rating Standard** | | | | | | |
|---|---|---|---|---|---|---|
| Area | Etching period (second) | Rating | | | | |
| | | ⊚ | O | Δ | × | × × |
| Raw 1 | 10 | OK | OK | OK | OK | NG |
| Raw 2 | 20 | OK | OK | OK | OK | |
| Raw 3 | 30 | OK | OK | OK | NG | NG |
| Raw 4 | 40 | OK | OK | OK | NG | NG |
| Raw 5 | 50 | OK | OK | NG | NG | NG |
| Raw 6 | 60 | OK | OK | NG | NG | NG |
| Raw 7 | 70 | OK | NG | NG | NG | NG |
| Raw 8 | 80 | OK | NG | NG | NG | NG |

| | | | | | | |
|---|---|---|---|---|---|---|
| OK: No patterns were detached. NG: Parts of or all of the patterns were detached. | | | | | | |

As shown in the table, the test piece where no patterns were detached in all the areas is represented by ⊚ , the test piece where no patterns were detached in the areas exposed to the etching liquid for up to 60 seconds is represented by O, the test piece where no patterns were detached in the areas exposed to the etching liquid for up to 40 seconds is represented by Δ, the test piece where no patterns were detached in the areas exposed to the etching liquid for up to 20 seconds is represented by × and the test piece where patterns were detached in all the areas is represented by × ×. According to this rating standard, it is considered that ratings from ⊚ to △ is suitable for practical use.

### Results

The results of evaluating the conductive paste obtained in Examples 1-8 based on the above-described rating standard are shown in Table 5.

**Table 5**

| Sample | Example 1 | Example 2 | Example 3 | Example 4 | Example 5 | Example 6 | Example 7 | Example 8 |
|---|---|---|---|---|---|---|---|---|
| Color of the top of Ag | white color | white color | white color | white color | white color | white color | white color | white color |
| Color of the side of the substrate | white color | white color | white color | white color | white color | white color | white color | white color |
| Dried film *(µm)* | 8.0 ± 1.0 | 8.0 ± 1.0 | 8.0 ± 1.0 | 8.0 ± 1.0 | 8.0 ± 1.0 | 8.0 ± 1.0 | 8.0 ± 1.0 | 8.0 ± 1.0 |
| Post-sintered film *(µm)* | 3.0 ± 1.0 | 3.0 ± 1.0 | 3.0 ± 1.0 | 3.0 ± 1.0 | 3.0 ± 1.0 | 3.0 ± 1.0 | 3.0 ± 1.0 | 3.0 ± 1.0 |
| Resolution (L/S) | <30µm | < 30µm | < 30µm | <30µm | < 30 µm | <30µm | < 30 µm | < 30 µm |
| Etching durability | ⊚ | ⊚ | ⊚ | ⊚ | ○ | Δ | ○ | ⊚ |

The results of evaluating the conductive paste obtained in Comparative Examples 1-5 based on the above-described rating standard are shown in Table 6.

**Table 6**

| Sample | Comparative Example 1 | Comparative Example 2 | Comparative Example 3 | Comparative Example 4 | Comparative Example 5 |
|---|---|---|---|---|---|
| Color of the top of Ag | white color | white color | white color | white color | white color |
| Color of the side of the substrate | white color | white color | white color | white color | white color |
| Dried film (µm) | 8.0 ± 1.0 | 8.0 ± 1.0 | 8.0 ± 10 | 10.0 ± 1.0 | 10.0 ± 1.0 |
| Post-sintered film (µm) | 3.0 ± 1.0 | 3.0 ± 1.0 | 3.0 ± 1.0 | 5.0 ± 1.0 | 5.0 ± 1.0 |
| Resolution (L/S) | < 30 µm | < 30 µm | < 30 µm | < 30 µm | < 30 µm |
| Etching durability | × × | × × | × | × | × × |

It is clear from Tables 5 and 6, that the conductive composition of the present invention, which contains silver particles with a specific particle diameter and lead-containing glass frit, has high chemical etching durability during the etching process where ribs are formed.

## Claims

1. A conductive composition comprising silver powder with an average diameter of 1.0-2.5 µm and lead-containing glass frit.

2. The conductive composition as set forth in claim 1 wherein the ratio of the content of said lead-containing glass frit to that of said silver powder is 0.75:99.25 to 6.0:94.0.

3. The conductive composition as set forth in claim 1 or 2 wherein the softening point of said lead-containing glass frit is 430-510 °C.

4. The conductive composition as set forth in claim 1 wherein said lead-containing glass frit contains PbO, B₂O₃ and SiO₂.

5. The conductive composition as set forth in one of claims 1-4, which is used in the address electrodes when a rib of a plasma display is formed by chemical etching.

6. Electrodes formed by using the conductive composition as set forth in one of claims 1-5.
